# EUROPEAN PATENT SPECIFICATION

(11) **EP 4 141 811 B1**
(45) Date of publication and mention of the grant of the patent: **27.03.2024**
(21) Application number: 21201604.2
(22) Date of filing: 08.10.2021
(51) Int. Cl.: G06V 10/98, G06V 10/96

(54) **IMAGE PROCESSING METHOD**
BILDVERARBEITUNGSVERFAHREN
PROCÉDÉ DE TRAITEMENT D'IMAGES

(30) Priority: 30.08.2021 TW 110132150
(43) Date of publication of application: 01.03.2023
(73) Proprietor: Acer Incorporated, New Taipei City 221 (TW); Acer Medical Inc., 22181 New Taipei City (TW)
(72) Inventor: Cheng, Meng-Che, 221 New Taipei City (TW); Yin, Ming-Tzuo, 221 New Taipei City (TW); Hsu, Yin-Hsong, 22181 NEW TAIPEI CITY (TW)
(74) Representative: 2K Patentanwälte Blasberg Kewitz & Reichel

(56) References cited:
- WO-A1-2021/064194
- CN-B- 105 677 763
- US-A1- 2019 297 252

## Description

### BACKGROUND

### Technical Field

The invention relates to a field of image processing, and particularly, relates to an image processing method related to image quality assessment.

### Description of Related Art

In general image recognition, an image to be tested is first subjected to image quality assessment (IQA) to filter out images with image quality lower than a threshold. A current method is to upload the image to be tested to a cloud end and make a cloud server to execute a plurality of selected IQA methods.

Equipment that a user uses and a current network environment may affect transmission time required for an image processing device (a local end) to upload/download the image and a recognition result to/from the cloud server. Therefore, if the current network environment is poor, it requires too long time for the image processing device to upload the image till the image recognition result is received, which reduces and affects the efficiency of image processing. Moreover, if the image to be tested does not pass the IQA method executed by the cloud server, the user still has to wait for the time from uploading the image to receiving the result of image quality failure. In this way, the user must re-shoot the image or select a new image, and, as a result, sometimes the recognition efficiency of using the cloud server to perform the IQA methods is lower than the efficiency of judging the image quality by naked eyes of the user. Therefore, it is inconvenient in use. Prior art documents CN 105 677 763 B, WO 2021/064194 A1 and US 2019/297252 A1 define cloud-based image quality assessment systems.

### SUMMARY

Therefore, the invention is directed to an image processing method, in the image processing method, image quality assessment methods are divided into first type of image quality assessment methods and second type of image quality assessment methods based on individual execution times of the image quality assessment methods executed on a local end and a total execution time of a cloud server, so as to dynamically adjust the device performing the image quality assessment methods according to user equipment and a network environment, and therefore it is closer to actual conditions of the user equipment and the network environment.

The invention provides an image processing method, which is adapted to an image processing device. The image processing device has a processor and a storage unit, and is communicatively connected to a cloud server. The image processing method executes following steps according to instructions of the image processing device. A plurality of image quality assessment methods are received. A total execution time of a cloud server for executing the image quality assessment methods is calculated, and individual execution times of an image processing device for executing the image quality assessment methods on are calculated. The image quality assessment methods are classified into first type of image quality assessment methods and second type of image quality assessment methods according to the individual execution times and the total execution time. The first type of image quality assessment methods are performed by the image processing device, and the second type of image quality assessment methods are performed by the cloud server.

In summary, according to the image processing method of the embodiment of the invention, the device executing the image quality assessment methods is adaptively and dynamically adjusted according to equipment status of the image processing device and a network status of the user. In this way, when the time that the user equipment and network environment conditions require is too long, some or all of the image quality assessment methods may be allocated to the image processing device or processor of the local end to perform image quality assessment during image processing.

To make the aforementioned more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram of an image processing device according to an embodiment of the invention.
FIG. 2 is a flowchart of an image processing method according to an embodiment of the invention.
FIG. 3 is a schematic flowchart of an image processing method according to an embodiment of the invention.
FIG. 4 is a flowchart of image recognition according to an embodiment of the invention.
FIG. 5A is a schematic diagram of an image processing method.
FIG. 5B is a schematic diagram of an image processing method according to an embodiment of the invention.

### DESCRIPTION OF THE EMBODIMENTS

A part of the embodiments of the invention will be described in detail with reference of the accompanying drawings. The referential symbols in the following description will be regarded as the same or similar elements when the same referential symbols appear in different drawings. These embodiments are only a part of the invention, and not all of the possible implementations of the invention are disclosed. To be more precise, these embodiments are just examples of systems and methods within the scope of the patent application of the invention.

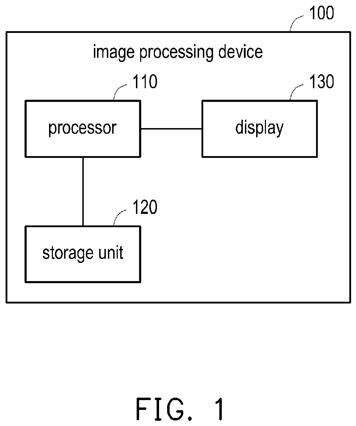

FIG. 1 is a block diagram of an image processing device according to an embodiment of the invention, but it is only for the convenience of description, and is not intended to limit the invention. Referring to FIG. 1, an image processing method is suitable for the image processing device. The image processing device 100 may include a storage unit 120, a processor 110, and a display 130. In some embodiments, the image processing device 100 may be implemented as a notebook computer, a desktop computer, a tablet computer, an industrial computer, a server, or other types of computer devices or image processing devices, which is not limited by the invention.

The storage unit 120 is used to store images, instructions, program codes, software modules, and other data. The storage unit may include a volatile storage circuit and a non-volatile storage circuit. The volatile storage circuit is used to store data in a volatile manner. For example, the volatile storage circuit may include a random access memory (RAM) or a similar volatile storage medium. The non-volatile storage circuit is used to store data in a non-volatile manner. For example, the non-volatile storage circuit may include a read only memory (ROM), a solid state disk (SSD) and/or traditional hard disk drive (HDD) or similar non-volatile storage media.

The display 130 may be implemented by a liquid crystal display (LCD), a plasma display, etc., or a touch screen with a touch module may also be used as the display 130.

The processor 110 is coupled to the storage unit 120 to control the entire or a part of the operations of the image processing device, and the process 110 is, for example, a central processing unit (CPU), or other programmable general purpose or special purpose microprocessor, a digital signal processor (DSP), a programmable controller, an application specific integrated circuit (ASIC), a programmable logic device (PLD), a graphics processing unit (GPU) or other similar devices, or a combination of these devices. The processor 110 may execute program codes, software modules, instructions, image quality assessment methods, default values of image processing, image recognition software, etc., that are recorded in the storage unit to implement the image processing method in the embodiment of the invention.

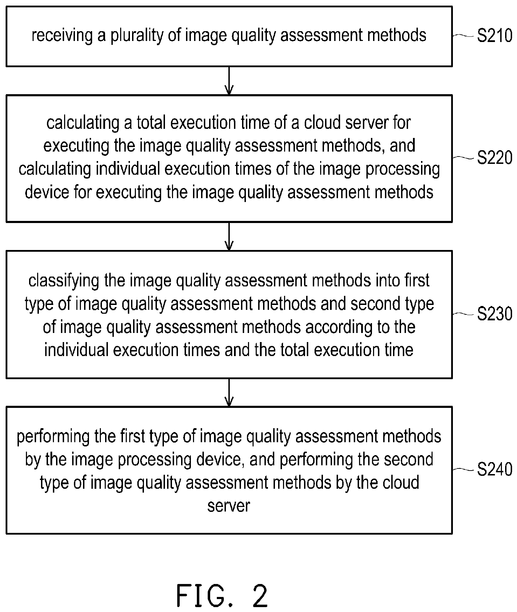

FIG. 2 is a flowchart of an image processing method according to an embodiment of the invention. Referring to FIG. 2, the method of the embodiment is adapted to the above-mentioned image processing device 100. In the embodiment, the image processing method of the invention includes at least the following steps according to the instructions of the image processing device 100. The processor 110 receives a plurality of image quality assessment methods (step S210). For example, the image quality assessment methods may be calculating entropy of the image, calculating an average gradient of the image, calculating a standard deviation of the image, calculating an edge intensity of the image, etc. In other words, the plurality of different image quality assessment methods are sent to the processor 110 according to setting values of the image quality assessment methods preset by the user or built in the image processing device.

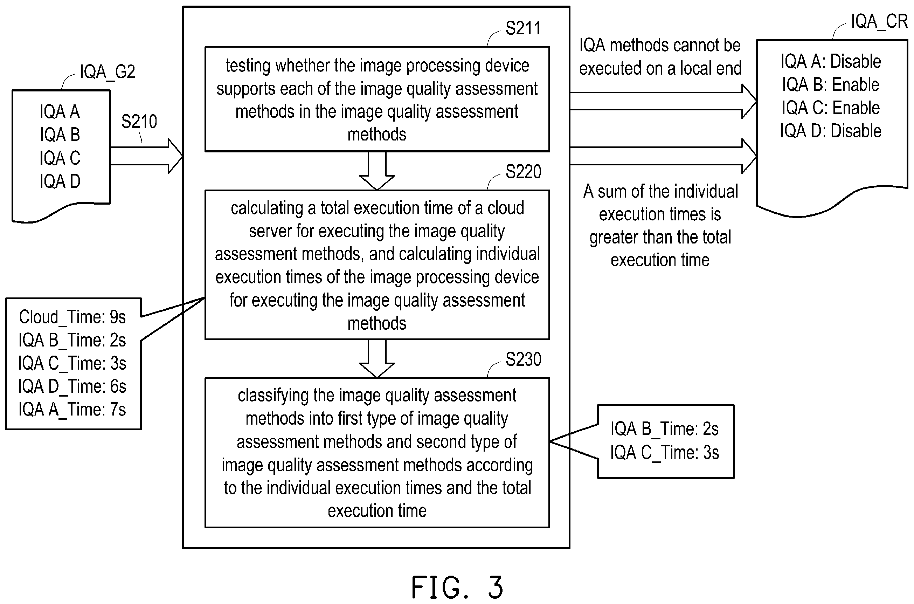

FIG. 3 is a schematic flowchart of an image processing method according to an embodiment of the invention. The processor 110 calculates a total execution time of a cloud server for executing the image quality assessment method, and calculates individual execution times of an image processing device for executing the image quality assessment methods (step S220). To be specific, the processor 110 receives a test image, executes each image quality assessment method on the test image, and calculates the individual execution time of each image quality assessment method. Referring to FIG. 3, in an embodiment, the default values of the image quality assessment methods include, an image quality assessment method A (i.e., IQA A), an image quality assessment method B (i.e., IQA B), an image quality assessment method C (i.e., IQA C) and an image quality assessment method D (i.e., IQA D). In addition, through the calculation of the processor 110, the execution times of the image quality assessment methods on the processor 110 are respectively 7 seconds (IQA A), 2 seconds (IQA B), 3 seconds (IQA C), and 6 seconds (IQA D). At the same time, the processor 110 uploads the test image to the cloud server to execute each image quality assessment method through the cloud server. Then, the processor 110 calculates a total execution time (here also referred to as "Cloud_Time") spent on receiving results of the cloud server executing the image quality assessment methods. For example, the processor 110 calculates the total execution time "Cloud_Time" from when the processor 110 uploads the test image to the cloud server till a time when the processor 110 receives the results of the image quality assessment methods (A, B, C, D) executed by the cloud server, which is 9 seconds.

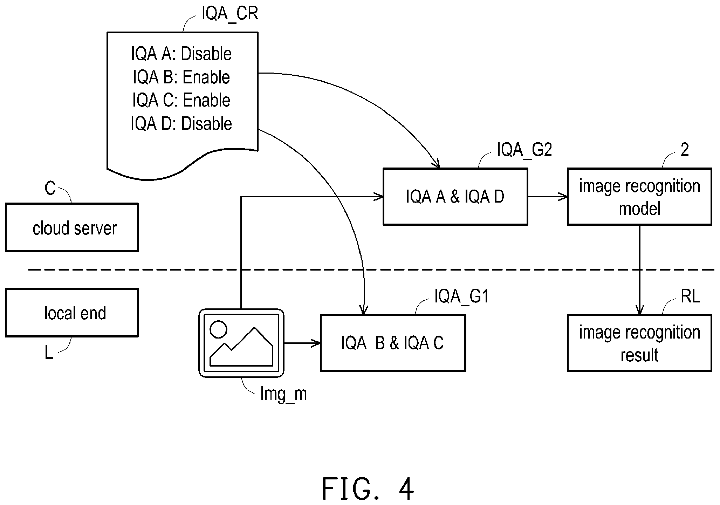

The processor 110 classifies the image quality assessment methods into a first type of image quality assessment methods and a second type of image quality assessment methods according to the individual execution times and the total execution time (step S240). FIG. 4 is a flowchart of image recognition according to an embodiment of the invention. Referring to FIG. 2, FIG. 3 and FIG. 4, to be specific, based on the individual execution times of the image quality assessment methods executed on the processor 110 and the total execution time of the image quality assessment methods executed on the cloud server, the processor 110 calculates the classification whose execution time is less than the total execution time, and then respectively classifies the image quality assessment methods into the first type image quality assessment methods and the second type image quality assessment methods. In an embodiment, the step S240 further includes that: the processor 110 classifies the image quality assessment methods with added individual execution times being less than the total execution time into the first type image quality assessment methods IQA_G1, and classifies the remaining image quality assessment methods as the second type image quality assessment methods IQA_G2. For example, in an embodiment, the total execution time "Cloud_Time" is 9 seconds, and the processor 110 classifies the image quality assessment method B with the individual execution time of 2 seconds and the image quality assessment method C with the individual execution time of 3 seconds as the first type of image quality assessment methods IQA_G1. Then, the processor 110 classifies the remaining image quality assessment methods A and D into the second type of image quality assessment methods IQA_G2.

In another embodiment, the step that the processor 110 classifies the image quality assessment methods into the first type of image quality assessment methods IQA_G1 and the second type of image quality assessment methods IQA_G2 according to the individual execution times and the total execution time (step S240) further includes that: the processor 110 sequentially arranges the image quality assessment methods according to the individual execution times. For example, the image quality assessment method A, the image quality assessment method B, the image quality assessment method C, and the image quality assessment method D are sequentially arranged into the image quality assessment method B, the image quality assessment method C, the image quality assessment method D, and the image quality assessment method A according to their individual execution times of 7, 2, 3, and 6 seconds. Then, the processor 110 classifies the first N image quality assessment methods as the first type of image quality assessment methods IQA_G1, and classifies the remaining image quality assessment methods as the second type of image quality assessment methods IQA_G2. For example, the value N may be set to one-third or one-half of a total number of the image quality assessment methods. On the other hand, the value N may be the sum of the first N individual execution times of the sequentially arranged image quality assessment methods that is less than the total execution time. For example, regarding the first two image quality assessment methods B and C, a sum of the individual execution times thereof is 5 seconds, which is less than the total execution time of 9 seconds of the image quality assessment methods executed at the cloud end. In the embodiment, N is a positive integer.

After the step that the processor 110 divides the plurality of image quality assessment methods into the first type of image quality assessment methods and the second type of image quality assessment methods according to the individual execution times and the total execution time (step S220). The image processing method of the invention further includes that: the processor 110 classifies the image quality assessment methods into the first type of image quality assessment methods and the second type of image quality assessment methods, and outputs an allocation result IQA_CR. Then, the processor 110 stores the allocation result IQA_CR in the storage unit 120, and sets the allocation result IQA_CR as an image processing default value, and the image processing device 100 and the cloud server execute the subsequent image quality assessment methods according to the allocation result IQA_CR. To be specific, the processor 110 records a classified result in step S220 as the allocation result IQA_CR and stores the same in the storage unit 120 of the image processing device 100. Then, the processor 110 sets the allocation result IQA_CR to the image processing default value of the image processing device. In other words, the image processing device 100 (i.e., the local end) and the cloud server respectively perform the subsequent image quality assessment methods according to the allocation result IQA_CR in subsequent image processing of the image processing device 100. In other words, in the subsequent image processing process of the image processing device, the processor 110 executes the first type of image quality assessment methods IQA_G1 according to the allocation result IQA_CR, and the cloud server executes the second type of image quality assessment methods IQA_G2.

Before the step of calculating the total execution time of the plurality of image quality assessment methods on the cloud server (step S220), the image processing method of the invention further includes: it is tested whether the image processing device 100 respectively supports each image quality assessment method in the plurality of image quality assessment methods (step S211); and the image quality assessment methods that are not supported by the image processing device 100 are classified into the second type of image quality assessment methods IQA_G2. To be specific, the processor 110 tests whether the image processing device 100 supports each image quality assessment method, and classifies the image quality assessment methods that are not supported by the image processing device 100 into the second type of image quality assessment methods, so as to improve classification efficiency of the image quality assessment methods. For example, certain image quality assessment methods require a specific peripheral device or a specific graphics card. When the image processing device is not equipped with such specific peripheral device or such specific graphics card, the processor 110 directly classifies the image quality assessment methods that require the specific peripheral device or the specific graphics card into the second type of image quality assessment methods. In another embodiment, the processor 110 may classify the second type of image quality assessment methods IQA_G2 according to the execution time of the individual image quality assessment method being greater than a threshold. For example, the processor 110 classifies the image quality assessment methods with execution times greater than 5 seconds into the second type of image quality assessment methods IQA_G2, so as to speed up the image quality assessment performed by the image processing device 100.

After the step that the image processing device 100 executes the first type of image quality assessment methods, and the cloud server executes the second type of image quality assessment method (step S240), the image processing method of the present invention further includes following steps: the cloud server uses the image that has passed the second type of image quality assessment methods IQA_G2 on an image recognition model 2, and outputs an image recognition result RL; and the image processing device 100 executes the first type of image quality assessment methods to output an execution result, where if the execution result is passed, the image recognition result RL is displayed on the display 130; and if the execution result is not passed, the image recognition result RL is not used. To be specific, according to the allocation result IQA_CR of the processor 110, the cloud server executes the second type of image quality assessment methods IQA_G2 on a subsequent image Img_m that needs quality assessment. Then, the image Img_m that passes the second type of image quality assessment methods IQA_G2 is used for image recognition to output the image recognition result RL of the image.

It should be noted that the processor 110 of the image processing device 100 executes the first type of image quality assessment methods IQA_G1 on subsequent images that require quality assessment to output an execution result, and the processor 110 correspondingly displays or does not use the image recognition result RL output by the cloud server according to the execution result of the first type of image quality assessment methods IQA_G1. Specifically, if the execution result of the first type of image quality assessment methods IQA_G1 is passed, and the execution result of the second type of image quality assessment methods IQA_G2 executed by the cloud server is also passed and the image recognition result RL is output, the processor 110 receives the image recognition result RL and outputs and displays the same on the display 130 coupled to the processor 110. On the other hand, if the execution result of the first type of image quality assessment methods IQA_G1 executed by the processor 110 is not passed, the processor 110 does not use (i.e., ignore) the image recognition result RL output by the cloud server. In this way, the user may use the image processing method of the invention to improve the execution efficiency of image quality assessment in image processing and shorten the time required for the image quality assessment.

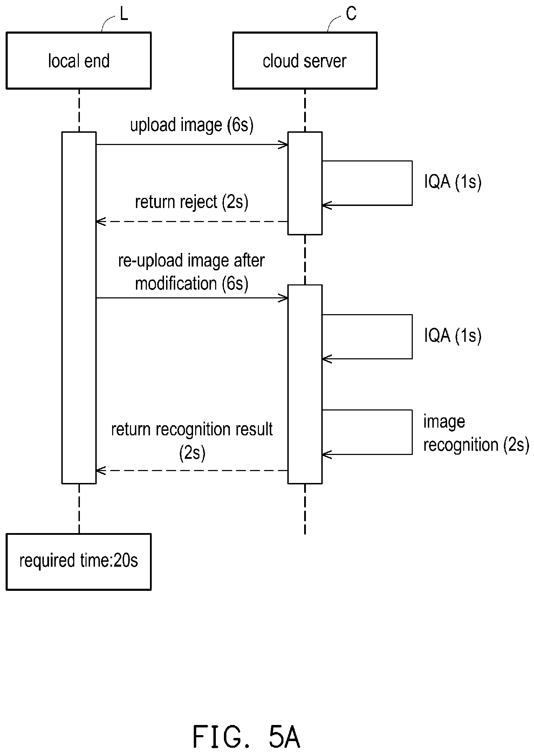

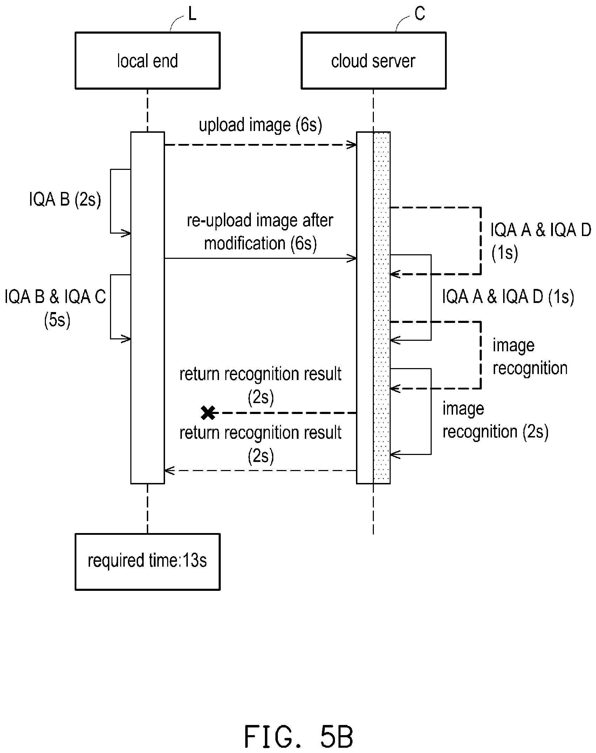

FIG. 5A is a schematic diagram of an image processing method. FIG. 5B is a schematic diagram of an image processing method according to an embodiment of the invention. Referring to FIG. 5A and FIG. 5B, FIG. 5A is an existing method that does not use the image processing method of the invention, where an image is uploaded to a cloud server C and image quality assessment is performed through the cloud server C. Since the quality of the image is lower than a setting value of the image quality assessment method, the cloud server C returns the image and rejects image recognition. Then, the user must re-upload a new image, and the cloud server C performs image quality assessment and image recognition, and then transmits an image recognition result to the image processing device of the user (i.e., a local end C). According to FIG. 5A, it is known that the existing method takes 20 seconds to perform image recognition. However, FIG. 5B is a schematic flow diagram of the image processing method of the invention. According to FIG. 5B, it is known that when the image processing device 100 uploads an image to the cloud server, the image processing device 100 may synchronously execute the image quality assessment method B and the image quality assessment method C. Therefore, when the image processing device 100 executes the image quality assessment method B, the quality of the output image (the image) does not meet the setting value of the image quality assessment method B, and another image is re-uploaded to the cloud server C. In this way, by using the image processing method of the invention, after the first upload of the image as shown by dotted lines and a gray background in FIG. 5B and before it takes 6 seconds to upload an image, 1 second to execute IQA A & IQA D, image recognition, and 2 seconds to return the recognition result, the second upload of image may be performed by the image processing device 100 of the local end, thereby shortening the time required for image recognition of the image to 13 seconds. It should be noted that as being well known to those skilled in the art, the existing image quality assessment methods are not limited to the four types in the embodiment, and the setting value of the image quality assessment is determined according to the default value of the selected image quality assessment method, and since it belongs to the content and technology well known to those skilled in the art, details thereof are not repeated. On the other hand, the image recognition processing may be image recognition processing for recognizing diabetic retinopathy from the image of eye scanning, iris recognition processing, text recognition, pattern recognition, object detection image recognition, face recognition, etc.

In summary, in the embodiment of the invention, when the user uses the image processing method to assist image quality assessment in image processing, the image quality assessment methods may be divided into the first type of image quality assessment methods and the second type of image quality assessment methods according to the individual execution times and the total execution time. Through the classification method, the image processing device located at the local end may execute the first type of image quality assessment methods, and the cloud server may execute the second type of image quality assessment methods, so that according to an equipment status of the image processing device of the local end and a connection status between the local end and the cloud server, a part of the image quality assessment methods are dynamically allocated for being executed on the local end (i.e., the image processing device), and another part of the image quality assessment methods are performed on the cloud server, so as to ameliorate the processing time of image quality assessment and improve the detection efficiency of the image processing method (i.e., image recognition).

## Claims

1. An image processing method, adapted for an image processing device (100), wherein the image processing device (100) comprises a processor (110) and a storage unit (120), and according to instructions of the image processing device (100), **characterized in that** the image processing method executes steps as follows:
receiving a plurality of image quality assessment, IQA, methods;
calculating a total execution time of a cloud server (C) for executing the image quality assessment methods, and calculating individual execution times of the image processing device (100) for executing the image quality assessment methods;
classifying the image quality assessment methods into first type of image quality assessment methods (IQA_G1) and second type of image quality assessment methods (IQA_G2) according to the individual execution times and the total execution time; and
performing the first type of image quality assessment methods (IQA_G1) by the image processing device (100), and performing the second type of image quality assessment methods (IQA_G2) by the cloud server (C);
wherein after the step of performing the first type of image quality assessment methods (IQA_G1) by the image processing device (100), and performing the second type of image quality assessment methods (IQA_G2) by the cloud server (C), the image processing method further comprises:
using an image (Img_m) that has passed the second type of image quality assessment methods (IQA_G2) on image recognition by the cloud server (C), and outputting an image recognition result (RL); and
executing the first type of image quality assessment methods (IQA_G1) by the image processing device (100) to output an execution result, and displaying the image recognition result (RL) on a display (130) if the execution result is passed; but not using the image recognition result (RL) if the execution result is not passed.

2. The image processing method as claimed in claim 1, wherein the step of classifying the image quality assessment, IQA, methods into the first type of image quality assessment methods (IQA_G1) and the second type of image quality assessment methods (IQA_G2) according to the individual execution times and the total execution time further comprises:
classifying at least one image quality assessment method (A, B, C, D, IQA A, IQA B, IQA C, IQA D) with added individual execution times being less than the total execution time as the first type of image quality assessment methods (IQA_G1), and classifying remaining image quality assessment methods in the image quality assessment methods as the second type of image quality assessment methods (IQA_G2).

3. The image processing method as claimed in claim 1 or 2, wherein the step of classifying the image quality assessment methods into the first type of image quality assessment methods (IQA_G1) and the second type of image quality assessment methods (IQA_G2) according to the individual execution times and the total execution time further comprises:
sequentially arranging the image quality assessment methods according to the individual execution times; and
classifying first N image quality assessment methods as the first type of image quality assessment methods (IQA_G1), and classifying remaining image quality assessment methods as the second type of image quality assessment methods (IQA_G2),
wherein a sum of the individual execution times of the first type of image quality assessment methods (IQA_G1) is less than the total execution time of the image quality assessment methods.

4. The image processing method as claimed in one of the preceding claims, wherein after the step of classifying the image quality assessment methods into the first type of image quality assessment methods (IQA_G1) and the second type of image quality assessment methods (IQA_G2) by the processor (110) according to the individual execution times and the total execution time, the image processing method further comprises:
using the first type of image quality assessment methods (IQA_G1) and the second type of image quality assessment methods (IQA_G2) to generate an allocation result (IQA_CR) of the image quality assessment methods.

5. The image processing method as claimed in one of the preceding claims, wherein before the step of calculating the total execution time of the cloud server (C) for executing the image quality assessment methods, the image processing method further comprises:
testing whether the image processing device (100) supports each of the image quality assessment methods in the image quality assessment methods; and
classifying image quality assessment methods that are not supported by the image processing device (100) as the second type of image quality assessment methods (IQA_G2).

6. The image processing method as claimed in one of the preceding claims, wherein the step of classifying the image quality assessment methods into the first type of image quality assessment methods (IQA_G1) and the second type of image quality assessment methods (IQA_G2) according to the individual execution times and the total execution time further comprises:
classifying image quality assessment methods with the individual execution times being greater than a threshold as the second type of image quality assessment methods (IQA_G2).

7. The image processing method as claimed in one of claims 4-6, wherein after the step of generating the allocation result (IQA_CR) of the image quality assessment methods, the image processing method further comprises:
storing the allocation result (IQA_CR) in the storage unit (120); and
setting the allocation result (IQA_CR) as an image processing default value.

## Patentansprüche

1. Bildverarbeitungsverfahren, das für eine Bildverarbeitungsvorrichtung (100) beschaffen ist, wobei die Bildverarbeitungsvorrichtung (100) einen Prozessor (110) und eine Speichereinheit (120) umfasst, und das gemäß den Anweisungen der Bildverarbeitungsvorrichtung (100) abläuft, **dadurch gekennzeichnet, dass** das Bildverarbeitungsverfahren die folgenden Schritte ausführt:
Empfangen einer Vielzahl von Bildqualitätsbewertungs, IAQ, -Methoden;
Berechnen einer Gesamtausführungszeit eines Cloud-Servers (C) zum Ausführen der Bildqualitätsbewertungs-Methoden, und Berechnen einzelner Ausführungszeiten der Bildverarbeitungsvorrichtung (100) zum Ausführen der Bildqualitätsbewertungs-Methoden,
Klassifizieren der Bildqualitätsbewertungs-Methoden in eine erste Art von Bildqualitätsbewertungs-Methoden (IQA_G1) und eine zweite Art von Bildqualitätsbewertungs-Methoden (IQA_G2) in Abhängigkeit von den einzelnen Ausführungszeiten und der Gesamtausführungszeit; und
Durchführen der ersten Art von Bildqualitätsbewertungs-Methoden (IQA_G1) durch die Bildverarbeitungsvorrichtung (100), und Durchführen der zweiten Art von Bildqualitätsbewertungs-Methoden (IQA_G2) durch den Cloud-Server (C); wobei nach dem Schritt des Durchführens der ersten Art von Bildqualitätsbewertungs-Methoden (IQA_G1) durch die Bildverarbeitungsvorrichtung (100) und des Durchführens der zweiten Art von Bildqualitätsbewertungs-Methoden (IQA_G2) durch den Cloud-Server (C), das Bildverarbeitungsverfahren weiterhin umfasst:
Verwenden eines Bildes (Img_m), das die zweite Art von Bildqualitätsbewertungs-Methoden (IQA_G2) zur Bilderkennung durch den Cloud-Server (C) bestanden hat, und Ausgeben eines Bilderkennungsergebnisses (RL); und
Ausführen des ersten Typs von Bildqualitätsbewertungs-Methoden (IQA_G1) durch die Bildverarbeitungsvorrichtung (100), um ein Ausführungsergebnis auszugeben, und Anzeigen des Bilderkennungsergebnisses (RL) auf einer Anzeige (130), wenn das Ausführungsergebnis bestanden ist; aber nicht Verwenden des Bilderkennungsergebnisses (RL), wenn das Ausführungsergebnis nicht bestanden ist.

2. Bildverarbeitungsverfahren nach Anspruch 1, wobei der Schritt des Klassifizierens der Bildqualitätsbewertungs, IAQ, -Methoden (IQA) in den ersten Typ von Bildqualitätsbewertungs-Methoden (IQA_G1) und den zweiten Typ von Bildqualitätsbewertungs-Methoden (IQA_G2) gemäß den einzelnen Ausführungszeiten und der Gesamtausführungszeit weiterhin umfasst:
Klassifizieren mindestens einer Bildqualitätsbewertungs-Methode (A, B, C, D, IQA A, IQA B, IQA C, IQA D), dessen addierte Einzelausführungszeiten kleiner als die Gesamtausführungszeit sind, als erste Art von Bildqualitätsbewertungs-Methoden (IQA G1), und Klassifizieren der übrigen Bildqualitätsbewertungs-Methoden in den Bildqualitätsbewertungs-Methoden als zweite Art von Bildqualitätsbewertungs-Methoden (IQA_G2).

3. Bildverarbeitungsverfahren nach Anspruch 1 oder 2, wobei der Schritt des Klassifizierens der Bildqualitätsbeurteilungsverfahren in den ersten Typ von Bildqualitätsbeurteilungsverfahren (IQA_G1) und den zweiten Typ von Bildqualitätsbeurteilungsverfahren (IQA_G2) gemäß den einzelnen Ausführungszeiten und der Gesamtausführungszeit weiterhin umfasst:
sequentielles Anordnen der Bildqualitätsbewertungs-Methoden entsprechend den einzelnen Ausführungszeiten; und
Klassifizieren der ersten N Bildqualitätsbewertungs-Methoden als erste Art von Bildqualitätsbewertungs-Methoden (IQA_G1) und Klassifizierung der übrigen Bildqualitätsbewertungs-Methoden als zweite Art von Bildqualitätsbewertungs-Methoden (IQA G2),
wobei eine Summe der einzelnen Ausführungszeiten des ersten Typs von Bildqualitätsbewertungs-Methoden (IQA_G1) kleiner ist als die Gesamtausführungszeit der Bildqualitätsbewertungs-Methoden.

4. Bildverarbeitungsverfahren nach einem der vorhergehenden Ansprüche, wobei nach dem Schritt des Klassifizierens der Bildqualitätsbewertungs-Methoden in den ersten Typ von Bildqualitätsbewertungs-Methoden (IQA_G1) und den zweiten Typ von Bildqualitätsbewertungs-Methoden (IQA_G2) durch den Prozessor (110) gemäß den einzelnen Ausführungszeiten und der Gesamtausführungszeit das Bildverarbeitungsverfahren ferner umfasst:
Verwenden des ersten Typs von Bildqualitätsbewertungs-Methoden (IQA_G1) und des zweiten Typs von Bildqualitätsbewertungs-Methoden (IQA_G2) zur Erzeugung eines Zuordnungsergebnisses (IQA_CR) der Bildqualitätsbewertungs-Methoden.

5. Bildverarbeitungsverfahren nach einem der vorhergehenden Ansprüche, wobei das Bildverarbeitungsverfahren vor dem Schritt des Berechnens der Gesamtausführungszeit des Cloud-Servers (C) zum Ausführen der Bildqualitätsbewertungs-Methoden weiterhin umfasst:
Testen, ob die Bildverarbeitungsvorrichtung (100) jede der Bildqualitätsbewertungs-Methoden in den Bildqualitätsbewertungs-Methoden unterstützt; und
Klassifizieren von Bildqualitätsbewertungs-Methoden, die von der Bildverarbeitungsvorrichtung (100) nicht unterstützt werden, als die zweite Art von Bildqualitätsbewertungs-Methoden (IQA_G2).

6. Bildverarbeitungsverfahren nach einem der vorhergehenden Ansprüche, wobei der Schritt des Klassifizierens der Bildqualitätsbewertungs-Methoden in die erste Art von Bildqualitätsbewertungs-Methoden (IQA_G1) und die zweite Art von Bildqualitätsbewertungs-Methoden (IQA_G2) gemäß den einzelnen Ausführungszeiten und der Gesamtausführungszeit weiterhin umfasst:
Einstufen von Bildqualitätsbewertungs-Methoden, bei denen die einzelnen Ausführungszeiten größer als ein Schwellenwert sind, als zweite Art von Bildqualitätsbewertungs-Methoden (IQA_G2).

7. Bildverarbeitungsverfahren nach einem der Ansprüche 4 bis 6, wobei das Bildverarbeitungsverfahren nach dem Schritt des Erzeugens des Zuordnungsergebnisses (IQA_CR) der Bildqualitätsbewertungs-Methoden weiterhin umfasst:
Speichern des Zuordnungsergebnisses (IQA_CR) in der Speichereinheit (120); und
Einstellen des Zuordnungsergebnisses (IQA_CR) als Standardwert für die Bildverarbeitung.

## Revendications

1. Procédé de traitement d'image qui est conçu pour un dispositif de traitement d'image (100), le dispositif de traitement d'image (100) comprenant un processeur (110) et une unité de mémoire (120), et qui se déroule conformément aux instructions du dispositif de traitement d'image (100), **caractérisé en ce que** le procédé de traitement d'image exécute les étapes suivantes:
recevoir une variété de méthodes d'évaluation de la qualité de l'image, IAQ;
calculer un temps d'exécution total d'un serveur en nuage (C) pour exécuter les méthodes d'évaluation de la qualité d'image , et calculer des temps d'exécution individuels du dispositif de traitement d'image (100) pour exécuter les méthodes d'évaluation de la qualité d'image;
classer les méthodes d'évaluation de la qualité d'image en un premier type de méthodes d'évaluation de la qualité d'image (IQA_G1) et un deuxième type de méthodes d'évaluation de la qualité d'image (IQA_G2) en fonction des temps d'exécution individuels et du temps d'exécution total; et
exécuter du premier type de méthodes d'évaluation de la qualité d'image (IQA_G1) par le dispositif de traitement d'image (100), et l'exécution du second type de méthodes d'évaluation de la qualité d'image (IQA_G2) par le serveur en nuage (C);
dans lequel, après l'étape d'exécution du premier type de méthodes d'évaluation de la qualité d'image (IQA_G1) par le dispositif de traitement d'image (100) et d'exécution du second type de méthodes d'évaluation de la qualité d'image (IQA_G2) par le serveur en nuage (C), le procédé de traitement d'image comprend en outre
utiliser une image (Img_m) qui a passé le deuxième type de méthodes d'évaluation de la qualité d'image (IQA_G2) pour la reconnaissance d'image par le serveur en nuage (C), et délivrer un résultat de reconnaissance d'image (RL); et
exécuter du premier type de méthodes d'évaluation de la qualité d'image (IQA_G1) par le dispositif de traitement d'image (100) pour délivrer un résultat d'exécution, et l'affichage du résultat de reconnaissance d'image (RL) sur un affichage (130) si le résultat d'exécution est réussi; mais l'absence d'utilisation du résultat de reconnaissance d'image (RL) si le résultat d'exécution n'est pas réussi.

2. Procédé de traitement d'image selon la revendication 1, dans lequel l'étape de classification des méthodes d'évaluation de la qualité d'image, IAQ, (IQA) en le premier type de méthodes d'évaluation de la qualité d'image (IQA_G1) et le deuxième type de méthodes d'évaluation de la qualité d'image (IQA_G2) selon les temps d'exécution individuels et le temps d'exécution total comprend en outre:
classer au moins une méthode d'évaluation de la qualité d'image (A, B, C, D, IQA A, IQA B, IQA C, IQA D), dont les temps d'exécution individuels additionnés sont inférieurs au temps d'exécution total, en tant que premier type de méthodes d'évaluation de la qualité d'image (IQA_G1), et classer les autres méthodes d'évaluation de la qualité d'image dans les méthodes d'évaluation de la qualité d'image en tant que deuxième type de méthodes d'évaluation de la qualité d'image (IQA_G2).

3. Procédé de traitement d'image selon la revendication 1 ou 2, dans lequel l'étape de classification des procédés d'évaluation de la qualité d'image en le premier type de procédés d'évaluation de la qualité d'image (IQA_G1) et le deuxième type de procédés d'évaluation de la qualité d'image (IQA_G2) selon les temps d'exécution individuels et le temps d'exécution total comprend en outre:
organiser séquentiel des méthodes d'évaluation de la qualité de l'image en fonction des différents temps d'exécution; et
classer des N premières méthodes d'évaluation de la qualité des images comme premier type de méthodes d'évaluation de la qualité des images (IQA_G1) et classement des autres méthodes d'évaluation de la qualité des images comme deuxième type de méthodes d'évaluation de la qualité des images (IQA_G2),
dans lequel une somme des temps d'exécution individuels du premier type de méthodes d'évaluation de la qualité d'image (IQA_G1) est inférieure au temps d'exécution total des méthodes d'évaluation de la qualité d'image.

4. Procédé de traitement d'image selon l'une quelconque des revendications précédentes, dans lequel, après l'étape de classification des méthodes d'évaluation de la qualité d'image en le premier type de méthodes d'évaluation de la qualité d'image (IQA_G1) et le deuxième type de méthodes d'évaluation de la qualité d'image (IQA_G2) par le processeur (110) en fonction des temps d'exécution individuels et du temps d'exécution total, le procédé de traitement d'image comprend en outre:
utiliser le premier type de méthodes d'évaluation de la qualité d'image (IQA_G1) et le second type de méthodes d'évaluation de la qualité d'image (IQA_G2) pour générer un résultat de correspondance (IQA_CR) des méthodes d'évaluation de la qualité d'image.

5. Procédé de traitement d'image selon l'une quelconque des revendications précédentes, dans lequel le procédé de traitement d'image comprend en outre, avant l'étape de calcul du temps d'exécution total du serveur en nuage (C) pour exécuter les méthodes d'évaluation de la qualité d'image:
tester si le dispositif de traitement d'image (100) prend en charge chacune des méthodes d'évaluation de la qualité d'image dans les méthodes d'évaluation de la qualité d'image; et
classer les méthodes d'évaluation de la qualité d'image qui ne sont pas prises en charge par le dispositif de traitement d'image (100) comme le second type de méthodes d'évaluation de la qualité d'image (IQA_G2).

6. Procédé de traitement d'image selon l'une quelconque des revendications précédentes, dans lequel l'étape de classification des méthodes d'évaluation de la qualité d'image en le premier type de méthodes d'évaluation de la qualité d'image (IQA_G1) et le deuxième type de méthodes d'évaluation de la qualité d'image (IQA_G2) selon les temps d'exécution individuels et le temps d'exécution total comprend en outre:
classer les méthodes d'évaluation de la qualité des images dont les temps d'exécution individuels sont supérieurs à une valeur seuil comme un deuxième type de méthodes d'évaluation de la qualité des images (AQI_G2).

7. Procédé de traitement d'image selon l'une quelconque des revendications 4 à 6, dans lequel le procédé de traitement d'image comprend en outre, après l'étape de génération du résultat d'association (IQA_CR) des méthodes d'évaluation de la qualité d'image:
stocker le résultat de l'association (IQA_CR) dans l'unité de stockage (120); et
définir le résultat de l'association (IQA_CR) comme valeur par défaut pour le traitement de l'image.
